# EUROPÄISCHE PATENTSCHRIFT

(11) **EP 1 425 079 B1**
(45) Veröffentlichungstag und Bekanntmachung des Hinweises auf die Patenterteilung: **23.01.2008**
(21) Anmeldenummer: 02755574.7
(22) Anmeldetag: 02.09.2002
(51) Int. Cl.: B01D 19/00, F01K 23/10

(54) **VERFAHREN UND VORRICHTUNG ZUR THERMISCHEN ENTGASUNG DES ARBEITSMITTELS EINES ZWEIPHASENPROZESSES**
METHOD AND DEVICE FOR THERMAL DE-GASSING OF THE ACTIVE SUBSTANCE OF A TWO-PHASE PROCESS
PROCEDE ET DISPOSITIF DE DEGAZAGE THERMIQUE DE LA SUBSTANCE ACTIVE D'UN PROCESSUS A DEUX PHASES

(30) Priorität: 14.09.2001 CH 170201
(43) Veröffentlichungstag der Anmeldung: 09.06.2004
(73) Patentinhaber: Alstom Technology Ltd, 5400 Baden (CH)
(72) Erfinder: LIEBIG, Erhard, 79725 Laufenburg (DE)
(86) Internationale Anmeldenummer: PCT/IB2002/003563
(87) Internationale Veröffentlichungsnummer: WO 2003/024558

(56) Entgegenhaltungen:
- DE-C- 19 512 466
- DE-C- 19 846 458
- US-A- 6 089 013

## Beschreibung

### TECHNISCHES GEBIET

Die vorliegende Erfindung betrifft ein Verfahren sowie eine Vorrichtung zur thermischen Entgasung eines als Kondensat oder Speisewasser vorliegenden Arbeitsmittels eines zweiphasenprozesses, insbesondere zur Entgasung eines vorgewärmten Kondensats.

### STAND DER TECHNIK

Bei einem Kombikraftwerk mit einer Gas- und einer Dampfturbinenanlage wird das heisse Abgas der Gasturbine einem Abhitzekessel zugeführt. Die Wärme dieses heissen Abgases wird im Abhitzekessel zur Erzeugung von Dampf genutzt, welcher Dampf zum Betrieb einer Dampfturbinenanlage dient. Abhitzekessel und Dampfturbinenanlage werden dabei in einem Wasser-/Dampf-Kreislauf betrieben. Um diesen Kreislauf zu schliessen, wird der in der Dampfturbinenanlage entspannte Dampf einem Kondensator zugeführt und dort kondensiert. Das Kondensat wird erneut dem Abhitzekessel zugeführt, um erneut erwärmt, verdampft und möglicherweise überhitzt zu werden.

Beim Wasser-/Dampf-Kreislauf, zu welchem im wesentlichen der Abhitzekessel, die Dampfturbinenanlage, der Kondensator, der Speisewasserbehälter/Entgaser sowie die Pumpen, verbindende Rohrleitungen usw. gehören, handelt es sich um ein System mit sehr hohen Reinheitsanforderungen an das Arbeitsmittel mit einer speziellen wasserchemischen Fahrweise zur Verminderung von Korrosion und Ablagerungen.

Zur optimalen Nutzung der Wärme des Abgases der Gasturbine besteht der Abhitzekessel aus bis zu 3 Druckstufen zur Dampferzeugung auf unterschiedlichen Druckniveaus. Zu einer derartigen Druckstufe gehören somit Economizer und Verdampfer sowie in Abhängigkeit der konkreten Anlage bzw. des Verfahrens der Dampferzeugung auch Dampftrommel und Ueberhitzer.

Zur Sicherstellung der chemischen Fahrweise des Wasser-/Dampf-Kreislaufes muss das Arbeitsmittel entgast werden, was beispielsweise durch ein thermisches Verfahren erfolgen kann. Eine Entgasung des Arbeitsmittels ist besonders wichtig, wenn sich das System auf Umgebungsdruck befand und geöffnet war, d. h. nach Revisionen oder bei Kaltstarts. Erhöhte Aufmerksamkeit erfordert die Entgasung auch während bzw. nach Zeiten großer Zusatzwassermengen.

Die thermische Entgasung kann dabei nach dem Stand der Technik entweder im Kondensator, im Speisewasserbehälter/Entgaser oder durch einen auf der Niederdrucktrommel aufgesetzten Entgaser erfolgen. Insbesondere die beiden letztgenannten Varianten sind durch die zusätzlich erforderlichen Komponenten investitionsintensiv. Hinzu kommt bei diesen Varianten durch den Bedarf von Heizdampf, für die Aufwärmung einer leicht unterkühlten Flüssigkeit (Unterkühlung 5 - 20 K) auf Sättigungstemperatur, ein energetischer Nachteil. Je höher der Entgaser bezüglich seines Druckniveaus angeordnet ist, um so grösser ist dieser Nachteil.

Im Zusammenhang mit der thermischen Entgasung des Arbeitsmittels sollte somit darauf geachtet werden, dass der Einsatz von Heizwärme für die Entgasung qualitativ und quantitativ den Erfordernissen entsprechend erfolgt, um den Gesamtwirkungsgrad der Anlage möglichst gering und zeitlich begrenzt zu mindern.

Die Entgasung ist bei einwandfreiem Funktionieren der Systeme sowie Dichtheit der im Unterdruckbereich arbeitenden Anlagen nicht zwangsläufig eine während des gesamten Betriebes der Anlage zu erfüllende Aufgabe. Aus diesem Grunde ist es auch nicht sinnvoll, bei hohen Investitionen und unter ständigem Leistungsverlust eine permanent gute Entgasung sicherzustellen. Es ist vielmehr sinnvoller, für den Fall spezieller Bedingungen oder der Realisierung zeitlich begrenzter Fahrweisen durch zusätzliche Massnahmen eine angemessene Entgasung zu gewährleisten, während des Normalbetriebes die Anlage jedoch ohne diese zusätzliche Entgasung zu betreiben.

Im Zusammenhang mit der im Rahmen dieser Erfindung relevanten Entgasung im Speisewasserbehälter sei insbesondere auf die EP 0 826 096 hingewiesen, welche ein Verfahren sowie eine Vorrichtung zur Entgasung eines Kondensats beschreibt. Die Schrift schlägt dabei vor, dem Speisewasserbehälter ein bereits vorgewärmtes aber mit kaltem Kondensat vermischtes Kondensat zur Entgasung zuzuführen, und als Heizmedium für die Aufhebung zum Zwecke der Entgasung einen Teilstrom des gleichen ebenfalls vorgewärmten jedoch nicht mit kaltem Kondensat vermischten Kondensats zu verwenden. Das Kondensat wird dabei in einem Kondensatvorwärmer, welcher im abgasseitigen Austrittbereich des Abhitzekessels angeordnet ist, vorgewärmt. Das im Speisewasserbehälter derart entgaste Kondensat kann anschliessend den Druckstufen des Abhitzekessels zugeführt werden.

Energetisch nachteilig bei diesem Verfahren ist, dass ein Teilstrom des bereits vorgewärmten Kondensats durch Zumischung von kaltem Kondensat wieder abgekühlt werden muss.

### DARSTELLUNG DER ERFINDUNG

Es ist daher Aufgabe der vorliegenden Erfindung, ein Verfahren zur thermischen Entgasung des Arbeitsmittels eines Zweiphasenprozesses sowie eine Vorrichtung zur Durchführung eines derartigen Verfahrens vorzuschlagen, welche eine konstruktiv einfache, gesamtwir kungsgradmäßig vorteilhafte und durch niedrige Investitionen charakterisierte Alternative zu bestehenden Entgasungsverfahren darstellen. Das Arbeitsmittel liegt dabei als Kondansat oder als Speisewasser vor. Insbesondere geht es dabei um Verfahren respektive Vorrichtungen, bei welchen Kondensat respektive Speisewasser in einem Speisewasserbehälter/Entgaser, dem vorgewärmtes Kondensat zugeführt und dem Speisewasser für in einem Abhitzekessel beheizte Heizflächen entnommen wird, entgast wird.

Die vorliegende Erfindung löst diese Aufgabe, indem in einem ersten Schritt Kondensat vorgewärmt, und ein Teil dieses vorgewärmten Kondensats abgezweigt, in einem zweiten Schritt weiter vorgewärmt, und anschliessend zur Beheizung des der Entgasung dienenden Speisewasserbehälters/Entgasers verwendet wird.

Gegenstand der vorliegende Erfindung ist folglich ein Verfahren, bei welchem das Kondensat in einem ersten Kondensatvorwärmer vorgewärmt wird, und bei welchem zum Beheizen des Kondensats respektive Speisewassers im Speisewasserbehälter/Entgaser ein Teilstrom des vorgewärmten Kondensats, welcher in einem zweiten Kondensafirorwärmer weiter vorgewärmt wird, verwendet wird.

Der Kern der Erfindung besteht somit darin, dass mit Hilfe einer zweistufigen Vorwärmung in konstruktiv einfacher Weise die im Abhitzekessel am abgasseitigen Ende vorhandene Restwärme optimal genutzt werden kann. Die Einfachheit der Lösung führt ausserdem dazu, dass der Investitionsaufwand im Vergleich zu den üblichen Entgasungsvarianten gering ist.

Gemäss einer ersten bevorzugten Ausführungsform der Erfindung zeichnet sich das Verfahren dabei dadurch aus, dass der zweite Kondensatvorwärmer im Abhitzekessel bzgl. des im Abhitzekessel strömenden Abgases stromauf vom ersten Kondensatvorwärmer angeordnet ist.

Gemäss einer zweiten bevorzugten Ausführungsform der Erfindung zeichnet sich das Verfahren dabei dadurch aus, dass das vorgewärmte Kondensat vor dem Einleiten in den Entgaser insbesondere über ein erstes Stellorgan entspannt wird, und dass insbesondere bevorzugt nach der Entspannung das Kondensat im unterkühlten Zustand mit einer Unterkühlung bevorzugt im Bereich von 5 bis 20 K vorliegt.

Gemäss einer dritten bevorzugten Ausführungsform des Verfahrens wird der doppelt vorgewärmte Teilstrom des zweiten Kondensatvorwärmers vor dem Einleiten in den Speisewasserbehälter insbesondere über ein zweites Stellorgan entspannt. Dabei liegt nach der Entspannung das Kondensat bevorzugtermaßen im Nassdampfzustand vor. Vor allem der Dampfgehalt führt bei der Einleitung des Kondensats in das Speisewasser zu einer optimalen Durchmischung und damit zu einer maximalen Austreibung von gelöstem Restgas. Dies insbesondere dann, wenn die Einleitung des Kondensats in den Speisewasserbehälter mit einem bevorzugt unterhalb der Wasseroberfläche angeordneten Düsenrohr erfolgt. Die dadurch bei annähernd Sattwasserbedingungen bewirkte starke Durchmischung des Speisewassers führt zusammen mit der schnellen Aufwärmung des über den Entgaser eingeleiteten Kondensats zu optimalen Entgasungsbedingungen.

Gemäss einer weiteren bevorzugten Ausführungsform des Verfahrens kann durch das Schliessen eines ersten Stellorgans das gesamte Kondensat auch über den zweiten Kondensatvorwärmer in den Speisewasserbehälter gelangen. In diesem Fall kann die Anlage mit einer intermittierenden, diskontinuierlichen Entgasung betrieben werden, dergestalt, dass beispielsweise die Entgasung nur bedarfsweise durchgeführt wird, wodurch die einleitend beschriebenen Wirkungsgradverluste nur temporär auftreten.

Weitere bevorzugte Ausführungsformen des erfindungsgemässen Verfahrens sind in den abhängigen Ansprüchen beschrieben.

Die Erfindung betrifft ausserdem eine Vorrichtung zur Durchführung eines Verfahrens, wie es oben geschildert wird, welche Vorrichtung sich dadurch auszeichnet, dass am abgasseitigen Ende des Abhitzekessels ein erster Kondensatvorwärmer bezüglich des im Abhitzekessel strömenden Abgases stromab vom zweiten Kondensatvorwärmer angeordnet ist, und dass der Ausgang des ersten Kondensatvorwärmers eine Verzweigung aufweist, deren einer Ausgang unmittelbar dem zweiten Kondensatvorwärmer zugeführt wird, während deren anderer Ausgang dem Entgaser zugeführt wird.

Weitere bevorzugte Ausführungsformen der erfindungsgemässen Vorrichtung sind in den abhängigen Ansprüchen beschrieben.

### KURZE ERLÄUTERUNG DER FIGUREN

Die Erfindung soll nachfolgend anhand eines Ausführungsbeispieles im Zusammenhang mit der Figur näher erläutert werden. Es zeigt:

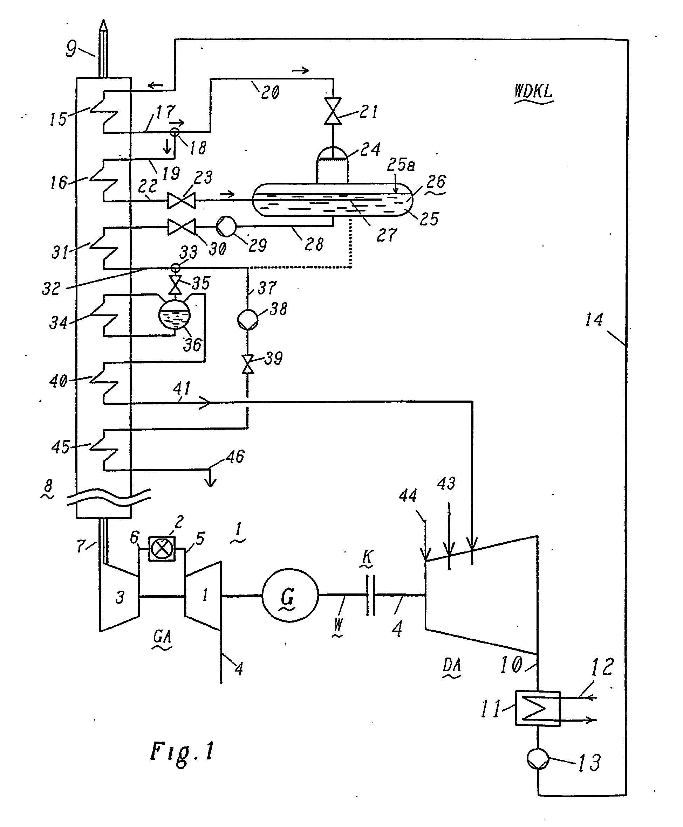

- Fig. 1: eine schematische Darstellung eines Kombikraftwerkes mit Mitteln zur thermischen Entgasung im Speisewasserbehälter/Entgaser.

### WEGE ZUR AUSFÜHRUNG DER ERFINDUNG

Figur 1 zeigt die schematische Darstellung eines Kombikraftwerkes, anhand derer die erfindungsgemässe Ausgestaltung der Entgasung erläutert werden soll. Im vorliegenden Ausführungsbeispiel werden zur Beschreibung der Vorrichtung und des Verfahrens teilweise gleiche Bezugszeichen beispielsweise für eine Leitung (z. B. Kondensatleitung) und das darin strömende Medium (z. B. Kondensat) verwendet. Dem Fachmann erschliessen sich diese Unterschiede aus den Zusammenhängen jedoch problemlos.

Bei der in Figur 1 dargestellten Anlage handelt es sich beispielhaft um eine sogenannte Einwellenanlage, bei welcher sich die Gasturbinenanlage GA und Dampfturbinenanlage DA mit dem Generator G auf einer Welle W befinden. Der Generator G ist zwischen Gasturbinenanlage GA und Dampfturbinenanlage DA angeordnet. Die Dampfturbinenanlage DA kann über die Kupplung K vom Generator G getrennt werden.

Bei einem Kombikraftwerk wird die im Abgas 7 der Gasturbine 3 enthaltene Wärme in einem Abhitzekessel 8 zur Dampferzeugung genutzt. Das dem Abhitzekessel 8 zugeführte Wasser wird in diesem Abhitzekessel 8 vorgewärmt, verdampft und gegebenenfalls überhitzt. Der im Abhitzekessel 8 erzeugte Dampf dient dem Antrieb einer Dampfturbinenanlage DA. Der in der Dampfturbinenanlage DA entspannte Dampf (Abdampf 10) wird im Kondensator 11 kondensiert und erneut dem Abhitzekessel 8 zugeführt.

Die Gasturbinenanlage GA besteht im vorliegenden Beispiel aus einem Verdichter 1, einer Brennkammer 2 und einer Gasturbine 3. In der Gasturbinenanlage GA wird Ansaugluft 4 in einem Verdichter 1 verdichtet, dann als Verbrennungsluft 5 der Brennkammer 2 zugeführt, das dort entstehende Heissgas 6 auf die Gasturbine 3 geleitet und unter Abgabe von Nutzleistung entspannt. Das Abgas 7 der Gasturbine 3 wird dem Abhitzekessel 8 zugeführt und dort zur Erzeugung von Dampf zum Betrieb der Dampfturbinenanlage DA genutzt. Nach dem Abhitzekessel 8 wird das Abgas 7 über einen Kamin 9 an die Umgebung abgegeben.

Unter dem Begriff der Gasturbinenanlage GA sind der Verdichter 1, die Brennkammer 2 und die Gasturbine 3 zusammengefasst. Eine Gasturbinenanlage kann dabei mehrere Brennkammern und mehrere Gasturbinen aufweisen. So ist beispielsweise bei Gasturbinenanlagen mit sequentieller Verbrennung einer Hochdruckbrennkammer mit Hochdruckturbine eine Niederdruckbrennkammer mit Niederdruckturbine nachgeschaltet. Auch kann eine Gasturbinenanlage mehrere Verdichter aufweisen.

Im vorliegenden Fall ist die Dampfturbinenanlage DA vereinfacht als eine Dampfturbine dargestellt. Im konkreten Fall kann es sich um eine mehrgehäusige Anlage unterschiedlichster Ausführung bestehend aus Hoch-, Mittel- und Niederdruckteil handeln.

Die Speisung des Abhitzekessels 8 erfolgt aus dem Kondensator 11 mittels der Kondensatpumpe 13 über die Kondensatleitung 14. Im Abhitzekessel 8 wird das Kondensat in den Kondensatvorwärmem 15,16 vorgewärmt und nachfolgend dem Speisewasserbehälter/Entgaser 26,24 zugeführt.

Die Entgasung des Kondensats erfolgt im hier geschilderten Ausführungsbeispiel in einem Speisewasserbehälter/Entgaser 26,24 in Kombination mit dem geteilten Kondensatvorwärmer 15,16. Das mittels der Kondensatpumpe 13 in den Abhitzekessel 8 geförderte Kondensat hat eine Temperatur von typischerweise 20 bis 45 °C (wassergekühlter Kondensator) bzw. 30 bis 55 °C (luftgekühlter Kondensator). Dieses Kondensat wird nun in einer ersten Stufe der Kondensatvorwärmung, dem ersten Kondensatvorwärmer 15, vorgewärmt.

Von dieser ersten Stufe der Kondensatvorwärmung, dem ersten Kondensatvorwärmer 15, wird das vorgewärmte Kondensat über die Kondensatleitung 17 zu einer Verzweigung 18 geführt. Hier wird das vorgewärmte Kondensat in einem ersten Teilstrom über die Kondensatleitung 20 und ein erstes Stellorgan 21 zum Entgaser 24 und in einem zweiten Teilstrom über die Kondensatleitung 19 zu einer zweiten Stufe der Kondensatvonwärmung, dem zweiten Kondensatvorwärmer 16, geführt. Das im Kondensatvorwärmer 16 weiter vorgewärmte Kondensat strömt über die Kondensatleitung 22 und ein zweites Stellorgan 23 über das Düsenrohr 27 in den Speisewasserbehälter 26.

Die Komponenten Entgaser 24 und Speisewasserbehälter 26 haben mit der Entgasung bzw. der Speicherung von Speisewasser unterschiedliche Funktionen. Bei vielen heutigen Ausführungen bildet der Entgaser 24 und der Speisewasserbehälter 26 eine Einheit. Aus diesem Grunde wird auch vom Speisewasserbehälter/Entgaser 26,24 gesprochen.

Der Speisewasserbehälter 26 ist die Schnittstelle zwischen dem Kondensat- und dem Speisesystem. Aus diesem Grunde wird das flüssige Arbeitsmedium stromauf des Eintritts in den Speisewasserbehälter 26 als Kondensat bezeichnet. Also wird auch das im Entgaser 24 herabrieselnde Wasser als Kondensat bezeichnet. Das im Speisewasserbehälter 26 gespeicherte Arbeitsmittel und der aus dem Speisewasserbehälter 26 austretende Massenstrom hingegen werden als Speisewasser bezeichnet.

Die thermische Entgasung einer Flüssigkeit beruht im vorliegenden Fall auf einer abnehmenden Gaslöslichkeit mit steigender Temperatur bei konstantem Druck. Im Sättigungszustand ist die Gaslöslichkeit Null. Für eine effiziente Entgasung von Wasser ist es wichtig, aus einer Unterkühlung von etwa 5 bis 20 K möglichst schnell den Sättigungszustand herbeizuführen. Man realisiert dies vorteilhaft mittels des Heizmediums Dampf innerhalb eines Mischvorwärmers. Zum möglichst vollständigen Austreiben der Gase sollte sich das Wasser in starker Bewegung befinden und eine möglichst grosse Oberfläche gegenüber dem Dampf haben. Man erreicht dies durch eine möglichst feine Verteilung des Wassers im Dampf oder des Dampfes im Wasser.

Das dem Entgaser 24 über die Kondensatleitung 20 zugeführte Kondensat wird über das erste Stellorgan 21 auf den Druck im Speisewasserbehälter/Entgaser 26,24 entspannt Für eine effektive Entgasung durch Aufwärmung des Kondensates auf Sättigungstemperatur sollte nach dem ersten Stellorgan 21 eine Unterkühlung im Bereich von 5 bis 20 K sichergestellt sein. Bei dem Entgaser 24 kann es sich zum Beispiel um einen Rieselentgaser handeln. Der Entgaser 24 ist auf dem Speisewasserbehälter 26 aufgesetzt, das heisst, das in den Entgaser 24 eintretende Kondensat rieselt über Einbauten in das im Speisewasserbehälter 26 gespeicherte Speisewasser 25.

Das aus der zweiten Stufe der Kondensatvorwärmung, dem zweiten Kondensatvorwärmer 16, über die Kondensatleitung 22 zum Speisewasserbehälter 26 strömende, doppelt vorgewärmte Kondensat wird über dem zweiten Stellorgan 23 ebenfalls auf den Druck im Speisewasserbehälter/Entgaser 26,24 entspannt. Die Temperatur am Austritt aus dem zweiten Kondensatvorwärmer 16 ist in Abhängigkeit der Bedingungen im Speisewasserbehälter/Entgaser 26,24 so zu regeln, dass nach der Entspannung im zweiten Stellorgan 23 bevorzugt Nassdampf entsteht. Vom zweiten Stellorgan 23 wird der Nassdampf einem Düsenrohr 27 zugeführt, welches Düsenrohr 27 im Speisewasserbehälter 26 im Wasserbereich angeordnet ist. Das Düsenrohr 27 weist eine Vielzahl von Öffnungen auf, aus welchen der Nassdampf in das Speisewasser 25 austritt. Der Dampf garantiert dabei das Halten des im Speisewasserbehälter 26 befindlichen Speisewassers 25 auf annähernd Sättigungsbedingungen bei gleichzeitiger ständiger Durchmischung des Speisewassers 25. Bevorzugterweise ist das Düsenrohr 27 daher unterhalb der Wasseroberfläche 25a des Speisewassers 25 angeordnet.

Der aus dem Speisewasser 25 austretende Dampf strömt dem im Entgaser 24 über Einbauten herabrieselnden Kondensat entgegen, wärmt dabei das herabrieselnde Kondensat auf und kondensiert. Die Parameter der Massenströme sind dabei so zu regeln, dass einerseits das in den Speisewasserbehälter 26 herabrieselnde Kondensat Sättigungstemperatur erreicht und andererseits der aufsteigende Dampf möglichst vollständig kondensiert. Im oberen Bereich des Entgasers 24 erfolgt der nicht dargestellte Abzug der ausgetriebenen Gase und des Restdampfes.

Die Niederdruck(ND)-Systeme moderner Abhitzekessel arbeiten mit dem System Verdampfer/Dampftrommel typischerweise in einem Druckbereich von 5 bis 7 bar (max. 10 bar), d. h. auf einem Temperaturniveau von 150 bis 165 °C (max. 180 °C).

Der Speisewasserbehälter/Entgaser 26,24 kann hinsichtlich der Zustände des enthaltenen Mediums zwischen dem Druckniveau des Kondensators 11 und des ND-Systems angeordnet werden. In den Extremfällen kann der Speisewasserbehälter/Entgaser 26,24 in den Kondensator 11 oder in das ND-System beispielsweise die Dampftrommel 36 integriert werden. In der Praxis wird man vor allem in Abhängigkeit des Brennstoffs der Gasturbinenanlage und des Konzeptes des Wasser-/Dampf-Kreislaufes den Speisewasserbehälter/Entgaser 26,24 entweder im "leichten Ueberdruckbereich" oder im "leichten Unterdruckbereich" anordnen bzw. betreiben. Man kann dies durch entsprechende Auslegung und Gestaltung der Anlage aber auch durch Rezirkulations- und Bypasssysteme erreichen.

Die Entgasung ist insbesondere dann wichtig, wenn beispielsweise Stillstände oder spezielle Fahrweisen (Zugabe von Zusatzwasser) zu einem erhöhten Gasgehalt im Wasser-/Dampf-Kreislauf geführt haben. Während des Normalbetriebes kann gegebenenfalls auf eine Entgasung verzichtet werden, um eine Maximierung der Leistung zu bewirken.

Soll die Anlage mit diskontinuirlicher Entgasung betrieben werden, so wird zum Betrieb ohne Entgasung das erste Stellorgan 21 geschlossen. Der gesamte Kondensatmassenstrom durchströmt nun auch die zweite Stufe der Kondensatvorwärmung, den zweiten Kondensatvorwärmer 16. Der Speisewasserbehälter/Entgaser 26,24 dient in diesem Fall lediglich der Speicherung vorgewärmten Speisewassers.

Das im Speisewasserbehälter 26 gespeicherte, entgaste Speisewasser 25 wird mittels der Speisewasserpumpe 29 über die Speisewasserleitung 28 und den ND-Economizer 31 zu einer Verzweigung 33 gefördert. Die Einstellung des Speisewassermassenstromes erfolgt durch das Stellorgan 30. Das im ND-Economizer 31 vorgewärmte Speisewasser (Speisewasservorwärmung) wird über die Verzweigung 33 und das Stellorgan 35 der ND-Dampftrommel 36 zugeführt. Die ND-Dampftrommel 36 steht mit dem ND-Verdampfer 34 in Verbindung. Weiter folgt der ND-Dampftrommel 36 ein ND-Ueberhitzer 40, an welchem die ND-Frischdampfleitung 41 anschliesst, die zur Dampfturbinenanlage DA führt.

Von der Verzweigung 33 oder alternativ direkt vom Speisewasserbehälter 26 kann mittels einer weiteren Speisewasserpumpe 38 über eine weitere Speisewasserleitung 37, ein weiteres Stellorgan 39 und einen weiteren Economizer 45 Speisewasser 46 zu weiteren Druckstufen des Abhitzekessels 8 gefördert werden. Der im Abhitzekessel 8 in den weiteren Druckstufen erzeugte Dampf wird der Dampfturbinenanlage DA über die entsprechenden Hochdruck(HD)- bzw. Mitteldruck(MD)- Frischdampfleitungen 44,43 zugeführt. In der Dampfturbinenanlage DA wird der Dampf arbeitsleistend entspannt. Der Abdampf 10 der Dampfturbinenanlage DA wird im Kondensator 11 unter Zuhilfenahme eines Kühlmediums (Wasser, Luft) 12 kondensiert. Um den Kreislauf zu schliessen, wird das Kondensat mittels der Kondensatpumpe 13 über die Kondensatleitung 14 erneut dem Abhitzekessel 8 zugeführt.

Der ND-Economizer 31, die ND-Dampftrommel 36, der ND-Verdampfer 34 und der ND-Ueberhitzer 40 bilden zusammen ein auf einer Druckstufe arbeitendes ND-Dampfsystem.

Die zur Wärmeübertragung vom Abgas 7 der Gasturbine 3 an das Speisewasser bzw. den Dampf im Abhitzekessel 8 angeordneten Rohrsysteme (Economizer, Verdampfer, Ueberhitzer) werden als Heizflächen bezeichnet.

Im vorliegenden Fall wurde ein Abhitzekessel bestehend aus einem Trommel-Umlaufverdampfer beschrieben. Daher wird das durch den Economizer vorgewärmte Speisewasser in die Dampftrommel gefördert. Das Trommelwasser wird im System Dampftrommel-Verdampfer umgewälzt und dabei anteilig verdampft. In der Dampftrommel erfolgt die Separation von Wasser und Dampf. Das Wasser wird erneut dem Verdampfer zugeführt, während der Dampf direkt oder über einen möglicherweise vorhandenen Überhitzer zur Dampfturbinenanlage gelangt. Die Strömung durch den Verdampfer kann als Naturumlauf oder Zwangsumlauf ausgeführt sein. Im Falle von Zwangsumlauf sind beispielsweise entsprechende Pumpen erforderlich. Die einzelnen Druckstufen des Abhitzekessels können aber auch nach dem Prinzip des Zwangdurchlaufverdampfers ausgeführt sein.

Selbstverständlich können zusätzlich weitere hier nicht erwähnte Systeme innerhalb des Wasser-/Dampf-Kreislaufes vorhanden sein. Für den Bereich des Abhitzekessels speziell des Kondensatvorwärmers 15 wäre zur Verhinderung von abgasseitiger Korrosion durch Taupunktunterschreitung ein möglicherweise vorhandenes Rezirkulationssystem zur Anhebung der kondensatseitigen Eintrittstemperatur in den Abhitzekessel zu erwähnen.

Nach dem Durchströmen des Abhitzekessels 8 gelangt das Abgas 7 schliesslich über einen Kamin 9 ins Freie.

### BEZEICHNUNGSLISTE

- 1: Verdichter
- 2: Brennkammer
- 3: Gasturbine
- 4: Ansaugluft
- 5: Verbrennungsluft
- 6: Heissgas
- 7: Abgas
- 8: Abhitzekessel
- 9: Kamin
- 10: Abdampf
- 11: Kondensator
- 12: Kühlmedium
- 13: Kondensatpumpe
- 14: Kondensatleitung, Kondensat
- 15: erster Kondensatvorwärmer, erste Stufe
- 16: zweiter Kondensatvorwärmer, zweite Stufe
- 17: Kondensatleitung
- 18: Verzweigung (zum zweiten Kondensatvorwärmer 16 und zum Entgaser 24)
- 19: Kondensatleitung (zum zweiten Kondensatvorwärmer 16), Teilstrom des Kondensates, Kondensat
- 20: Kondensatleitung (zum Entgaser 24), Teilstrom des Kondensates, vorgewärmtes Kondensat
- 21: erstes Stellorgan
- 22: Kondensatleitung (zum Speisewasserbehälter 26), doppelt vorgewärmtes Kondensat
- 23: zweites Stellorgan
- 24: Entgaser
- 25: Speisewasser (im Speisewasserbehälter 26)
- 25a: Wasserstand / Wasseroberfläche des Speisewassers (im Speisewasserbehälter 26)
- 26: Speisewasserbehälter
- 27: Düsenrohr
- 28: Speisewasserleitung (zum ND-Economizer 31), Speisewasser
- 29: Speisewasserpumpe
- 30: Stellorgan
- 31: ND-Economizer (Speisewasservorwärmer)
- 32: Speisewasserleitung (zur Verzweigung 33)
- 33: Verzweigung (zur ND-Dampftrommel 36 und weiteren Druckstufen)
- 34: ND-Verdampfer
- 35: Stellorgan
- 36: ND-Dampftrommel
- 37: Speisewasserleitung (zu weiteren Druckstufen)
- 38: Speisewasserpumpe
- 39: Stellorgan
- 40: ND-Überhitzer
- 41: ND-Frischdampfleitung
- 43: MD-Frischdampfleitung
- 44: HD-Frischdampfleitung
- 45: Economizer (Speisewasservorwärmer)
- 46: Speisewasserleitung (zu weiteren Druckstufen), Speisewasser

- GA: Gasturbinenanlage
- DA: Dampfturbinenanlage
- G: Generator
- W: Welle
- K: Kupplung
- WDKL: Wasser-/Dampf-Kreislauf

## Patentansprüche

1. Verfahren zur thermischen Entgasung eines als Kondensat (14) respektive als Speisewasser (25) vorliegenden Arbeitsmediums eines Zweiphasenprozesses durch Beheizen des Arbeitsmediums in einem Speisewasserbehälter/Entgaser (26,24), dem vorgewärmtes Kondensat (20) zugeführt und dem Speisewasser (28) für in einem Abhitzekessel (8) beheizte Heizflächen (31,34, 40, 45) entnommen wird,
**dadurch gekennzeichnet, dass**
das Kondensat (14) in einem ersten Kondensatvorwärmer (15) vorgewärmt wird, und dass zum Beheizen des Kondensats (20) respektive Speisewassers (25) im Speisewasserbehälter/Entgaser (26,24) ein Teilstrom des vorgewärmten Kondensats (19), welcher in einem zweiten Kondensatvorwärmer (16) weiter vorgewärmt wird, verwendet wird.

2. **Verfahren nach Anspruch 1, dadurch gekennzeichnet, dass der zweite Kondensat**vorwärmer (16) im Abhitzekessel (8) bzgl. im Abhitzekessel strömenden Abgases (7) stromauf vom ersten Kondensatvorwärmer (15) angeordnet ist.

3. Verfahren nach einem der Ansprüche 1 oder 2, **dadurch gekennzeichnet, dass** das vorgewärmte Kondensat (20) vor dem Einleiten in den Entgaser (24) insbesondere über ein erstes Stellorgan (21) entspannt wird, und dass insbesondere bevorzugt nach der Entspannung das Kondensat (20) im unterkühlten Zustand mit einer Unterkühlung bevorzugt im Bereich von 5 bis 20 K vorliegt.

4. Verfahren nach einem der Ansprüche 1 bis 3, **dadurch gekennzeichnet, dass** das doppelt vorgewärmte Kondensat (22) vor dem Einleiten in den Speisewasserbehälter (26) insbesondere über ein zweites Stellorgan (23) entspannt wird, und dass insbesondere bevorzugt nach der Entspannung das Kondensat (22) im Nassdampfzustand vorliegt.

5. Verfahren nach einem der vorhergehenden Ansprüche, **dadurch gekennzeichnet, dass** die Einleitung des Kondensates (22) in den Speisewasserbehälter (26) mit einem insbesondere unterhalb der Wasseroberfläche (25a) angeordneten Düsenohr (27) erfolgt.

6. Verfahren nach einem der vorhergehenden Ansprüche, **dadurch gekennzeichnet, dass** die Entgasung diskontinuierlich durchgeführt wird, wobei durch Schliessen eines ersten Stellorgans (21) das gesamte Kondensat (14) über beide Kondensatvorwärmer (15,16) unentgast in den Speisewasserbehälter (26) geleitet wird.

7. Verfahren nach einem der vorhergehenden Ansprüche, **dadurch gekennzeichnet, dass** es sich beim Speisewasser um das Speisewasser eines Wasser/Dampf-Kreislaufes eines Kombikraftwerkes mit einer Gasturbinenanlage (GA) und einer Dampfturbinenanlage (DA) handelt.

8. Vorrichtung zur Durchführung des Verfahrens nach einem der vorhergehenden Ansprüche, **dadurch gekennzeichnet, dass** am abgasseitigen Ende des Abhitzekessels (8) der erste Kondensatvorwärmer (15) stromab vom zweiten Kondensatvorwärmer (16) angeordnet ist, und dass der kondensatseitige Ausgang des ersten Kondensatvorwärmers (15) eine Verzweigung (18) aufweist, deren einer Ausgang unmittelbar dem zweiten Kondensatvorwärmer (16) zugeführt wird, während deren anderer Ausgang dem Entgaser (24) zugeführt wird.

9. Vorrichtung nach Anspruch 8, **dadurch gekennzeichnet, dass** der Entgaser (24) auf dem Speisewasserbehälter (26) angeordnet und als Rieselentgaser (24) ausgeführt ist.

## Claims

1. Process for thermally degassing a working medium, which is in the form of a condensate (14) or feedwater (25), of a two-phase process by heating the working medium in a feedwater vessel/degassing means (26, 24), to which preheated condensate (20) is fed and from which feedwater (28) for heating surfaces (31, 34, 40, 45) heated in a heat recovery steam generator (8) is removed, **characterized in that** the condensate (14) is preheated in a first condensate preheater (15), and **in that** a partial stream of the preheated condensate (19), which is preheated further in a second condensate preheater (16), is used to heat the condensate (20) or feedwater (25) in the feedwater vessel/degassing means (26, 24).

2. Process according to Claim 1, **characterized in that** the second condensate preheater (16) is arranged in the heat recovery steam generator (8), upstream of the first condensate preheater (15) with respect to exhaust gas (7) flowing in the heat recovery steam generator.

3. Process according to Claim 1 or 2, **characterized in that** the preheated condensate (20), before being introduced into the degassing means (24), is expanded in particular across a first control element (21), and **in that** particularly preferably after the expansion the condensate (20) is in the supercooled state, with supercooling preferably in the range from 5 to 20 K.

4. Process according to one of Claims 1 to 3, **characterized in that** the twice-preheated condensate (22) is expanded, in particular across a second control element (23), before being introduced into the feedwater vessel (26), and **in that** particularly preferably after the expansion the condensate (22) is in the wet steam state.

5. Process according to one of the preceding claims, **characterized in that** the condensate (22) is introduced into the feedwater vessel (26) using a nozzle tube (27) arranged in particular below the water surface (25a).

6. Process according to one of the preceding claims, **characterized in that** the degassing is carried out discontinuously, with all the condensate (14) being passed into the feedwater vessel (26) in an undegassed state via both condensate preheaters (15, 16), as a result of a first control element (21) being closed.

7. Process according to one of the preceding claims, **characterized in that** the feedwater is the feedwater for a water/steam cycle of a combined-cycle power plant having a gas turbine installation (GA) and a steam turbine installation (DA).

8. Apparatus for carrying out the process according to one of the preceding claims, **characterized in that** the first condensate preheater (15) is arranged downstream of the second condensate preheater (16), at the exhaust-gas end of the heat recovery steam generator (8), and **in that** the condensate-side outlet of the first condensate preheater (15) has a branching point (18), one outlet of which is fed direct to the second condensate preheater (16), while its other outlet is fed to the degassing means (24).

9. Apparatus according to Claim 8, **characterized in that** the degassing means (24) is arranged on the feedwater vessel (26) and is designed as a trickling degassing means (24).

## Revendications

1. Procédé de dégazage thermique d'une substance active d'un processus à deux phases présente sous forme de condensat (14), respectivement d'eau d'alimentation (25), par chauffage de la substance active dans un récipient d'eau d'alimentation/dégazeur (26, 24), auquel du condensat préchauffé (20) est acheminé et duquel de l'eau d'alimentation (28) est prélevée pour des surfaces de chauffage (31, 34, 40, 45) chauffées dans une chaudière à chaleur perdue (8),
**caractérisé en ce que**
le condensat (14) est préchauffé dans un premier préchauffeur de condensat (15), et **en ce que** pour le chauffage du condensat (20), respectivement de l'eau d'alimentation (25), dans le récipient d'eau d'alimentation/dégazeur (26, 24), on utilise un courant partiel du condensat préchauffé (19) qui est davantage préchauffé dans un deuxième préchauffeur de condensat (16).

2. Procédé selon la revendication 1, **caractérisé en ce que** le deuxième préchauffeur de condensat (16) est disposé dans la chaudière à chaleur perdue (8) en amont du premier préchauffeur de condensation (15), par rapport au gaz d'échappement (7) s'écoulant dans la chaudière à chaleur perdue (8).

3. Procédé selon l'une quelconque des revendications 1 ou 2, **caractérisé en ce que** le condensat préchauffé (20) est détendu avant son introduction dans le dégazeur (24), notamment par le biais d'un premier organe de réglage (21), et **en ce que** notamment de préférence après la détente, le condensation (20) se présente à l'état sous-refroidi avec un sous-refroidissement de préférence de l'ordre de 5 à 20 K.

4. Procédé selon l'une quelconque des revendications 1 à 3, **caractérisé en ce que** le condensat (22) deux fois préchauffé est détendu avant son introduction dans le récipient d'eau d'alimentation (26), notamment par le biais d'un deuxième organe de réglage (23), et **en ce que** notamment de préférence après la détente, le condensat (22) se présente à l'état de vapeur humide.

5. Procédé selon l'une quelconque des revendications précédentes, **caractérisé en ce que** l'introduction du condensat (22) dans le récipient d'eau d'alimentation (26) s'effectue avec un tube de buse (27) disposé sous la surface de l'eau (25a).

6. Procédé selon l'une quelconque des revendications précédentes, **caractérisé en ce que** le dégazage est effectué de manière discontinue, la totalité du condensat (14) étant guidée par fermeture d'un premier organe de réglage (21) par le biais des deux préchauffeurs de condensat (15, 16) sous forme non dégazée dans le récipient d'eau d'alimentation (26).

7. Procédé selon l'une quelconque des revendications précédentes, **caractérisé en ce que** l'eau d'alimentation est l'eau d'alimentation d'un circuit eau/vapeur d'une centrale combinée avec une installation de turbine à gaz (GA) et une installation de turbine à vapeur (DA).

8. Dispositif pour mettre en oeuvre le procédé selon l'une quelconque des revendications précédentes, **caractérisé en ce qu'** on dispose au niveau de l'extrémité côté gaz d'échappement de la chaudière à chaleur perdue (8), le premier préchauffeur de condensat (15) en aval du deuxième préchauffeur de condensat (16), et **en ce que** la sortie côté condensat du premier préchauffeur de condensat (15) présente une ramification (18) dont une sortie est acheminée directement au deuxième préchauffeur de condensat (16) tandis que l'autre sortie est acheminée au dégazeur (24).

9. Dispositif selon la revendication 8, **caractérisé en ce que** le dégazeur (24) est disposé sur le récipient d'eau d'alimentation (26) et est réalisé sous la forme d'un dégazeur à écoulement (24).
